# EUROPEAN PATENT APPLICATION

(11) **EP 3 085 922 A1**
(43) Date of publication of application: **26.10.2016**
(21) Application number: 14871207.8
(22) Date of filing: 15.12.2014
(51) Int. Cl.: F02C 3/08

(54) **CIRCULAR PROPULSION JET COMPRESSOR-ENGINE**

(30) Priority: 17.12.2013 ES 201301160; 27.01.2014 ES 201400068; 17.02.2014 ES 201400114; 10.07.2014 ES 201400560
(71) Applicant: Orellana Hurtado, Diego, 28232 Madrid (ES)
(72) Inventor: Orellana Hurtado, Diego, 28232 Madrid (ES)
(74) Representative: Cueto, Sénida
(86) International application number: PCT/ES2014/000211
(87) International publication number: WO 2015/092088

(57) **Abstract**

Circular propulsion jet compressor-engine, through a circular combustion chambers propellants spheroidal geometry set, generates a tangential push the turning radius and therefore resulting angular momentum about the shaft of the circle in rotation. This impulse is the consequence of the principle of action-reaction, the violent expansion that occurs inside the combustion chamber, when burning mixtures of fuel and oxidizer at high pressure, or by merging a small mass of H₂, encapsulated and simultaneously subjected to very high pressure, constant electromagnetic fields and high-frequency electric fields and high peak intensity. The high pressure on the oxidant or H₂, is achieved using the force resulting from the centripetal acceleration shaft rotating about a significant mass of a piston, solid or liquid and alternatively or cyclically. The gases and vapors produced are cooled inside the engine. In the combustion reaction, water vapor is condensed and water obtained by, pollution is retained inside the engine.

## Description

### Technical field

The technical fields are compression of any gas, and the transformation of thermal energy into mechanical or electrical, using conventional fuels or using hydrogen in a nuclear fusion process or a combustion process with oxygen.

### State of the art

With respect to gas compression, there are piston compressors, for the alternative displacement of a piston and a thermal or electrical engine and transmission for connecting-rod - crank, screw compressors, liquid piston, lobes (roots) and radial centrifugal or axial type and Gas Compressor Centripetal (P8602668 dated 10/18/1986, ES2002041 A6 publication dated 01/07/1988). Regarding the transformation of thermal energy into mechanical or electrical current state of the art uses the internal combustion engines, reciprocating piston and rod-crank system, jet engines, rocket engines and gas turbines or vapor from the latter conventional fuels or nuclear fission.

In the PCT/ES2014/00211 (number of international publication WO 2015/092088 A1), is requested priority date of the following Spanish patents: Patent numbers P201301160, entitled "Celeste impulse engine", presentation dated 12.07.2013; P201400068 title "Drive motor propellant ceramic circular and omnidirectional" presentation dated 01.27.2014; P201400114 title of "Circular drive motor system and neutralization of flue gas" with filing date 02.17.2014; P201400560 title "Inertial gas compressor piston" with filing date 07.10.2014.

Of PCT/ES201400211 and those national patents the relevant Reports on the State of the Art and the Written Opinion have been drafted. These Reports and Written Opinion of the WIPO and the SPTO have been published on dates 06.25.2015; 08.24.2015; 09.01.2015; 09.17.2015 and 02.10.2016 respectively and collect the state of the art in relation to this project.

Technical problems: In reciprocating engines and turbines in jet engines, there is a limitation imposed by the performance temperature and / or the compression ratio of the oxidizer; very high values of the parameters mentioned above needed to increase yields, are not admissible because they break mechanisms. Engines lack directional capability to drive the vehicle. Another problem is environmental pollution of engines of the current art, by the continued expulsion of micro-particles into the atmosphere. In nuclear fusion, their use as thermal energy is being investigated, and two problems have raised: the transfer of energy to achieve fusion and stability of the process.

### Brief description of the invention

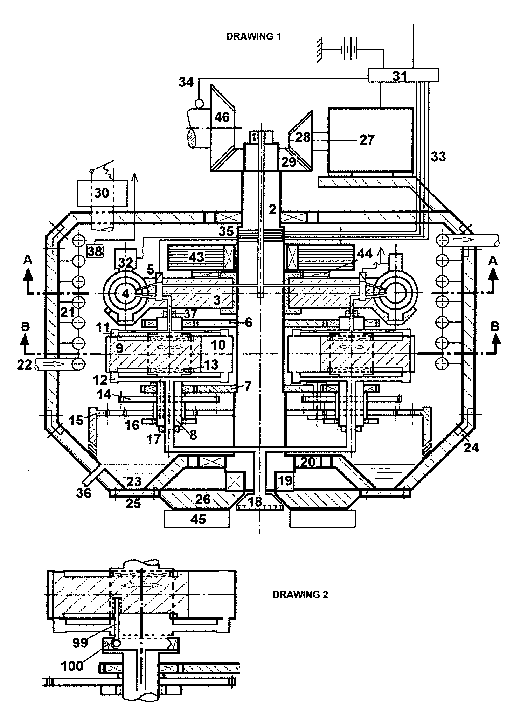

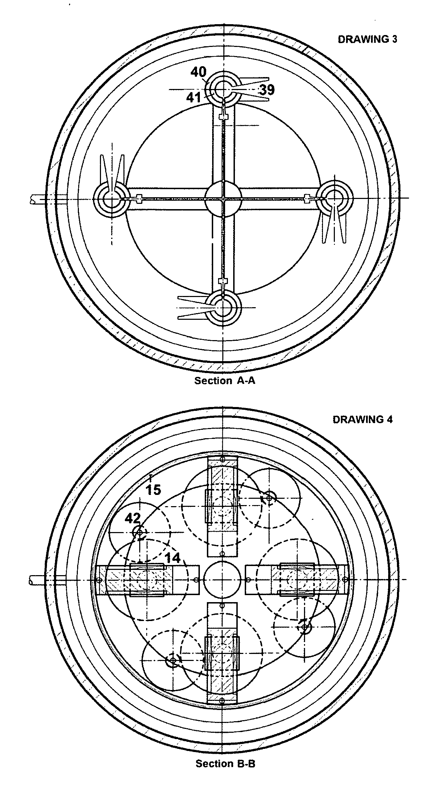

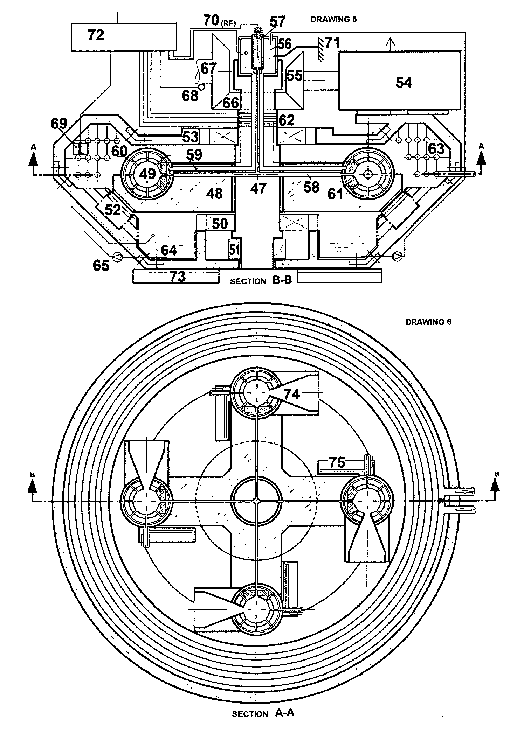

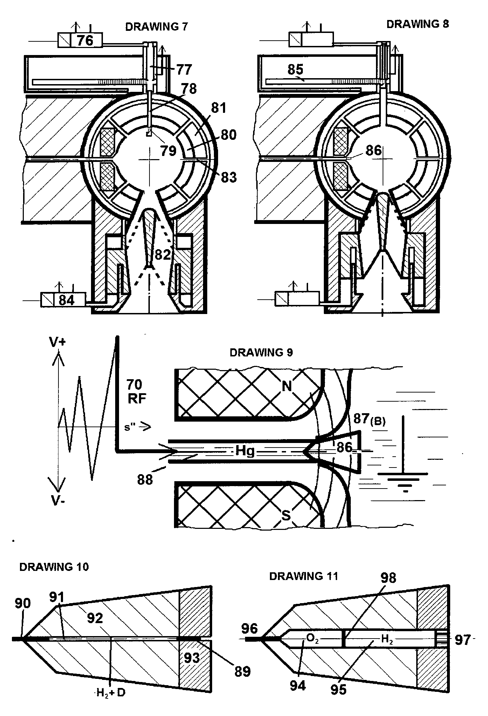

Proposed solutions: For internal combustion engines, (Figures 1, 2, 3 and 4) higher temperatures than those of the prior art are achieved by simplifying the mechanisms in contact with the flame, limiting these to spherical chambers (4), internally protected by refractory ceramic (41) and coated steel (40) the thickness required to support hundreds of atmospheres. Newton's third law, action and reaction, is used, leaving the hot gases from the combustion chamber by exhaust nozzle jet (39) at hypersonic speeds. Spherical chambers are located in a circle, so that the reaction thrust is experiencing tangential to the radius of that circle, producing a rotational movement and a torque on the shaft (2) of the circle. For achieve impulse capacity in any direction, a compensating rotating inertial mass (43) of the angular momentum is mounted and the thruster system (32) are endowed to direct output of combustion gases according to a vector prefixed. If it is an air vehicle, the rotation of a free wheel compensates the angular momentum. To get this, two wheels of equal spheres are mounted, supporting the rotation of one over the other, on a common shaft. A system of worm screw and helical gearwheel allows modifying the vertical shaft wheels spheres and therefore the propulsive reaction in relation to the horizontal symmetry plane of the motor.

The propulsion system based on the principle of action-reaction needs to inject a large mass of oxidizer in the chambers to obtain high thrust power and high thermal efficiency, what requires injecting the oxidizer at high or very high pressure. One solution is to incorporate a compressor inertial piston, method and mechanism by which the centripetal acceleration is used to compress the oxidizer (air) by a piston (9) within a cylinder (10), similar to piston compressors, but without using the crankshaft and rod-crank transmission. This gas compression procedure can be applied to any other industrial activity that requires high or very high pressure within a rotating system or a high amount of compressed gas.

Atmospheric pollution by micro-particles is avoided, condensing the water vapor from combustion, through an internal heat exchanger (21). Water falls to the bottom of the engine and drag those particles. These are stored in tanks (23) to its withdrawal by the maintenance of the equipment.

In engines using the hydrogen in a nuclear fusion process (Drawing 5, 6, 7, 8, 9 and 10) combustion chambers (49), in which the nuclear fusion process is performed, are spherical and protected interiorly with refractory ceramic (80) and coated steel (81) of the necessary thickness to withstand thousands of atmospheres. These chambers are placed in a circle and the principle of action-reaction is used, leaving powered steam at high pressure spheres. This vapor is produced by heating very quickly a liquid (Hg), liquid that fills completely the spheres and is subjected to high pressure, due to the centrifugal acceleration by rotation of the spheres, the density of the liquid and the "hydrostatic column" turning radius. In this liquid it is introduced, via a differential pressure mechanism, (64), a capsule (79) with a small elongated hydrogen bubble (91), on which it is applied a constant magnetic field (87) and a variable electric field, simultaneously (72) RF (radio frequency), both perpendicular to each other, transforming the hydrogen inside the capsule, in a plasma with characteristics of inductive impedance. This process happens because millions of charged micro particles are rotating in the plasma in the same direction but with different radii. This geometry produces a mutual inductance "L" of millionths of henrys. A power peak (72) of the RF source, frequency in millions of Hz and thousands of amperes, gets transfer of energy for the onset of fusion of the encapsulated hydrogen, by the Joule effect on the impedance of the bubble (L. ω), and by increasing the "cross section" through inversion that produces rotation of protons, each time you change the direction of the electric field, which forces them to leave by their rotation tangent, being some of them on the same path but in opposite directions. The process is cyclical and pulsed. The heat of fusion of hydrogen destroys the capsule (86) and evaporates the liquid inside the sphere. This steam exits the sphere propeller (74) which has a shutter mechanism (82) that opens or closes by differential pressure. The reaction to the expulsion of steam maintains the turning circle of spheres and torque in the shaft of rotation, transforming thermal energy into mechanical. Liquid vapors are condensed inside, in the circular heat exchanger (65) and return to the spheres for a new cycle.

Technical advantages of the invention: For internal combustion engines, it can improve thermal performance, provides the possibility to drive a vehicle with the engine, having this directional capability, and eliminates pollution caused by particles of unburned fuel (pollution), some of them toxic.

The gas compressor inertial piston provides advantages in performance and compression ratio for any type of gas or mixture of gas and liquid, high pressure and high volumetric displacement within a revolutionized rotating system and can use pistons of various materials, including liquids.

The process of nuclear fusion uses the Joule effect for the energy transfer of fusion and does not require additional costs for the containment of the plasma, since it is a pulsating process, with the added advantage of achieving a direct conversion of thermal energy into mechanical.

### Detailed description of the invention

The present invention relates to a novel process for converting thermal energy into mechanical, using conventional fuels, including hydrogen, a new method of compressing gases and mixtures of phases thereof, a new nuclear fusion process and equipment necessary for performing the procedures mentioned above.

**Circular propulsion jet compressor engine:** (Drawings 1, 2, 3 and 4). Working with conventional (gas or liquid) fuel, has a vertical central shaft (2) supported on axial bearings (19) and provided with bearings radial (20) for tangential efforts. Jointly to this axis, mechanical arms (3) are fixed and at the ends of these, spherical coated refractory ceramic combustion chambers (4) are installed. A solenoid device (5) and control system (31) inject fuel in stoichiometric amounts and oxidizer to the chambers (4). The fuel is supplied through a rotary joint (1) by one end of the central shaft (2) which is hollow in axial direction to such effects. The oxidizer (air) is provided at the other end of the shaft, through filter and muffler (18). Before being injected into the combustion chambers, combustion air is compressed to high pressure by a reciprocating piston (9) inside cylinders (10). The oxidizer (air) penetrates into these cylinders by a rotary valve (17), located at one end of the shafts (8) and the intake valves (12). The pistons move transversely to the mentioned central shaft (horizontal movement), guided by a linear bearing (13), installed in the central part of the inner cylinder (10). The force that reciprocates the pistons is equal to the product of the mass thereof corresponding to the turning radius of the center of mass centripetal acceleration, in relation to the central shaft. To get this, the secondary axles (8), by axial and radial bearings, are leaned on the circular platforms (6) and (7). These platforms transmit the rotation of the central shaft to the secondary axles in the form of circular line, while the axles rotate upon themselves. This last rotational movement, depending on the different versions of manufacturing, can be performed continuously in low speed engines or discontinuously for high speeds and, in this case, it may be mechanical or electromechanical. In continuous mode, the secondary axles (8) perform a slow turn on themselves, by action of the sprockets (14), geared to a speed reduction system (42) which in turn engages the circular rack (15) fixed to the support structure. In discontinuous mode of mechanical type, each of the secondary axles (8) forms a set of two pieces, the upper embracing the cylinder and the driven member and the lower conductive, the linear bearing is of open type and installed with the slot to the lower generatrix, coinciding with a linear slot, held in the center of the cylinder. A rod (99) joined to the lower and central part of the piston can slide by both slots. When the piston reaches the end of its travel in compression, and at that moment, the strength of the centrifugal field is maximum and the rod acts against a spring to engage (100) the clutch shoe to the two axes, transmitting the rotation of the lower shaft to the upper that has the cylinder, which performs half turn, just until the rod stops pressing the spring because the strength of the centrifugal field pushes in opposite direction. When the piston displacement completes a new compression the cycle repeats. In electromechanical discontinuous mode, the zipper (15) is not required and an electric motor attached to the circular platform. This motor transmits the rotation to the secondary axle (8) by means of a worm screw and a sprocket (14). A position detector, in each of the bases of the cylinder, detects piston position and gives operation command to the motor when the piston reaches the end of its travel. Completed half turn of the cylinder, a limit switch stops the engine which remains still until the position detector of the opposite base restarts.

In any of the alternative manufacturing systems, the piston reciprocates inside the cylinder while compressing the air on the farthest base from the central shaft base, aspirating air into the cylinder, next to the nearest point of the central shaft. For a given size and mass of the piston, the volumetric displacement is directly proportional to the angular velocity of the central shaft and the compression of air directly proportional to the square of the angular velocity, which can achieve high compression ratios too. The system supports compression in more than one stage, placing two or more transversely cylinders on the same secondary axis, mounted on each other and maintaining the same relative position between them in turn. Multiple stages are achieved by connecting the discharge of the compressed gas from the first, with the admission of the immediate superior and so on until the last discharge is connected to the output rotary joint.

The compressed combustion at high pressure and temperature (effect of adiabatic compression), is channeled through rotary joints (37), the control injection, in stoichiometric proportions with the fuel, injected into the combustion chamber (4). The high temperature of combustion rapidly increases the pressure inside the chambers. This causes the outgassing by the exhaust nozzle (39) of Drawing 3. The gases exit hot, since there is no temperature limitation as it happens in jet reaction engine, because the turbine is not required to drive the compressor. This, alongside the increased pressure of the oxidizer, allows increasing the thrust power and therefore, the thermal performance. Gases, propelled at high temperature, are not expelled directly into the atmosphere. Before they are cooled inside the engine through an intercooler ring (21), condensing the water vapor from combustion and sliding, that water from the condensed steam, the solid particles (pollution) from the combustion engine to the bottom (23) thereof. Periodically for maintenance they are removed.

The engine startup requires an auxiliary electric motor to reach the angular design speed. This is performed by a motor (27) and gear (28). Non condensable gases are taken out through a catalyst muffler and an overpressure opening gate (30). The power generated is transmitted through the central shaft to a pinion gear (46), for corresponding use.

For the generation of static electricity and other uses, the motor-compressor, will be anchored by metal supports (26) and anti-vibration foundations (45) to the ground. For use in vehicles, it is necessary to compensate the angular momentum caused in the rotation in an only direction by the wheel of spheres and so that, the resulting angular momentum is the closest to zero at all times. For this system, a rotational inertia mass (43) is implemented, supported by bearings axial rollers (44), on a sliding track which is integrated in the support arms of the spheres (3). The inertia mass rotates freely about the central shaft (2). Before the startup, the angular momentum of the set is zero. Ongoing, the system consists of two rotating masses, one motor and another resting free on the previous one. The principle of conservation of angular momentum will make the free inertia mass (43) rotate opposite to the motor (central shaft (2) and spheres (4), so that the resultant angular momentum remains zero.

In vehicles, you can use the motor as the operating element and directional steering of the vehicle by an electric sphere motor (32) capable of changing the exhaust nozzle jet (39), it has a radial component and a tangential component when the spheres pass through a determined arc of circumference. The force of the radial component produces a transverse force to the rotational shaft (2) and therefore, a directional vector on the whole.

For air transport, two wheels of spheres and thrusters on the same shaft rotate one above the other and keep the resulting zero angular momentum. In this case, the common shaft is supported by a semicircular structure, supported on bearings. This structure slide on metallic guides, what allows to modify its verticality in relation to the horizontal plane of the vehicle. This modification is performed with an electric motor. This motor drives a worm screw. The set is fixed to the vehicle structure and the worm gear to a helical rack that is being attached to the semicircular structure. A direction vector, introduced in the control panel will produce an order of simultaneous rotation, to the motor of the worm screw and to the electric sphere motor; according to the order of the control panel, the worm screw will cause the motor shaft is inclined and the electric motor of the spheres rotate, so that the transverse thrust component to the shaft, has the appropriate value in the perpendicular direction to the central shaft.

The auxiliary motor (27) is reversible and can function as engine startup, or when the heat engine cannot give the power demand that the shaft (46) requires, or as a power generator when the power thermal thrusters (39) exceed the demand of the shaft (46). To get this, there is a tachometer (34) which sends to the control of the central shaft the revolutions and there is software designed for the maintenance of these revolutions in a narrow room for maneuver. When there is a fall in demand of power, the central shaft accelerates and the motor (27) accelerates, too; its rotor overtakes the rotating magnetic field of the stator and passes to generate power, charging a battery. When the tachometer indicates a fall speed, there is a sign that the heat engine cannot give the demanded power (46); then, the motor (27) starts to work as an auxiliary engine, consuming battery power and helping to maintain constant revolutions of the central shaft, similar to a hybrid engine.

**The Circular propulsion jet compressor engine working with hydrogen in a process of nuclear fusion:** (Drawings 5, 6, 7, 8, 9 and 10). It has a central vertical shaft (47), supported by radial and axial bearings (50) and (51). A cylindrical support (53) and completely closed structure give anchor to bearing caps. Metallic arms are joined to the central shaft. These arms, which support hollow spheres at their ends (49), in addition to being anchored to the central shaft (47), are leaned on circular rollers (52). The interior walls of the spheres are protected by refractory ceramics (80) and the spheres are enveloped by steel or cast iron (81) of sufficient thickness to withstand the pressure of thousands of atmospheres. Both the aforementioned ceramics and the iron protections are perforated by a network of small ducts (60) and (83), all hydraulically interconnected. Inside the spheres, DC coils (61) are installed. These coils close their magnetic flux crossing the end of the fine ducts that drill the spheres at their closest point to the central shaft. These ducts (88) are connected hydraulically to a tank (57), located at the top of the central shaft (47). This tank is fully enclosed and electrically insulated and it contains a high-density and high fluidity liquid (Hg or any other liquid with the same features) which is a good conductor of electricity. The tank and the liquid rotate together with the central shaft. The liquid is connected to an RF source (70) of high-frequency and high peak intensity that only is activated with an order from the central control (72) and for a very small period of time. Concentric and together with the previous tank (57), a second tank (56) is installed, electrically isolated from the above, containing the liquid (Hg), grounded (71) and hydraulically connected to the network of small ducts (60) and (83). These ducts inwardly perforate the metal and ceramic that cover the spheres. The liquid completely fills the interior of the spheres (49), the ducts (58), (59) and (60) and the tanks (56) and (57) to their level, existing electrical continuity throughout the liquid at zero potential when the engine is stopped or, if it is working, when the RF source is not activated. The fuel is prepared in capsules, shown in Drawing 10. Each of these capsules is conically shaped and perforated in its axial shaft by one fine capillary (93) which is filled in the order of millionths of gram, with hydrogen and deuterium. The end of the capillary located on the smallest base of the capsule, is closed with a metallic tip (90) (steel) and the opposite end by a plug (89). Inside the sphere, the liquid pressure breaks the plug and the liquid comes into direct contact with hydrogen, inside the capillary, compressing against the other end. The larger base of the capsule (88) is made of an insulating material of high density, resulting the larger base of the capsule heavier than the smaller one. The rest of the capsule (92) is made of a good electrically insulating material, of low density and impermeable to hydrogen molecules.

Fuel capsules are introduced into each of the combustion chambers through a feeder (75) consisting of a system of "comb capsules" (85) similar to combs bullets from firearms. Furthermore, the feeder has a hydraulic cylinder (77) with its corresponding plunger (78) double acting control valve (76). The hydraulic cylinder works by differential pressure. The plunger surface in contact with the liquid of the sphere is smaller than the surface remaining inside the cylinder. If the liquid of the sphere increases its pressure, the plunger is collected and, if it is equal at both ends, the plunger extends. When the plunger is collected, it loads a capsule in a cavity that it has at its end. When the plunger extends, it deposits this capsule (79) inside the liquid of the sphere. The centrifugal force pushes the capsules comb (80), so the capsules are introduced one by one into the cavity of the plunger, when it is collected. Fuel capsules, once introduced in the liquid of the sphere (79) move towards the closest part to the shaft of rotation, since they are less dense than the liquid and the whole assembly is subjected to strong centrifugal acceleration, which are "embedded" as shown in drawing 9. The capsule is embedded with its metallic tip (90) in physical and electrical contact with the capillary liquid, (88) which is fed from tank 57. At the very same moment when the capsule is embedded, the electrical continuity between the liquid in the fine duct (88) and the liquid of the sphere is interrupted, since the capsule has insulated walls, leaving the small compressed hydrogen bubble, inside the capsule, between two electrodes, one of which is the steel tip (90) of the small base, placed in the conduit (88) and the other electrode is the liquid (Hg) of the sphere. The interruption of electrical continuity is the signal received by the control (72) to send the RF energy, as pulsing and growing, to the liquid (Hg) of the tank (57). The electrode (90) receives this RF energy through the circuit liquid (58) and the conduit (88). This RF energy causes an electric arc between the two electrodes of the capsule. This arc ionizes the hydrogen transforming it into plasma and the combined action of pulsed electric field of the RF and the constant magnetic field of the electromagnets, transform this plasma in an inductive impedance (induction "L" of very small value, but the impedance X_{L} of significant value for the high frequency of the alternating current of the RF source). At this moment, a peak of high RF causes fusion of hydrogen nuclei, by fulfilling: Lawson criterion derived from the high compaction bubble nuclei and for the necessary time; the thermal energy from the Joule effect by passing an high intensive current through a resistive-inductive element; the significant increase in the cross section of the hydrogen nuclei caused by the change of direction of rotation that protons and deuterons are forced to make, when the direction of the electric field changes.

The spheres have thrusters (74) for the exit of steam and hot liquid at high speed. These thrusters have shutters (82) which open or close by differential pressure. When fluid pressures outdoor ducts and inside the sphere is equal, the surfaces differential produces a differential pressure to close the shutter, (drawing 8). If a rapid increase in pressure occurs inside the sphere, the pressure differential opens the shutter, (drawing 7). At that very moment when a rapid temperature rise occurs, the liquid evaporates in contact with a very small point but to very high temperature produced by nuclear fusion. This evaporation does not imply increase of volume of liquid or loss of energy of the bubble, since the liquid is above its critical point and the transformation from liquid to vapor is carried out at zero enthalpy, but if it involves an increase of the internal pressure in the sphere, caused by the expansion of the liquid itself and its steam and the expansion of the bubble at the point of nuclear fusion.

An increase of pressure opens the shutter and vapor and liquid go out through it at high linear velocity, at the same time that new liquid enters the sphere through the ducts (which drill the spheres) (83) and (88) boosted by the centrifugal force of the rotating set. This new liquid acts as inner cooling element, evaporating and going out again through the shutter until all of the thermal energy produced in the fusion is transformed into steam and the reaction thrust in the propeller. Nuclear fusion involves a point of dimensions in the order of cubic millimeters, but at a temperature of about 20 million K. By expanding in the interior of the sphere, the thermal energy of the bubble expands under very high pressure but exactly the same at all points of its surface, because the liquid and vapor that surrounds it, it is impossible the existence of differential pressure between two different points, the liquid or vapor located equidistant from the shaft of rotation, within the sphere. Energy (and temperature) associated with the fusion, is being distributed on this surface and increasing its value per unit area and it decays with the square of the distance to the point of origin of the fusion. This means that when the bubble reaches measures in the order of cubic centimeters in its expansion, its surface temperature will be in the order of 200 000 K and when it reaches cubic decimeters temperature can be supported by ceramic walls inside the sphere, subject to continuous cooling process. The mechanical stability of the equipment requires a commitment of balance between the amount of hydrogen injected into the capsule, the inner dimension of the sphere and its cooling capacity.

The hot vapor and liquid exit through the exhaust nozzle with two velocity components, one tangential derivative of thermal energy associated with the fusion, which is the cause of engine thrust and decays with temperature, and one radial, associated with its inertia mass which tends to follow the curved path of the rotating system. This velocity component is used to cool the hot vapors and liquids, in a ring (63) exchanger formed by iron pipes whose inside is protected against oxidation and cooling water circulates. This set of pipes occupies the entire circular perimeter and internal engine. The condensed and cooled vapors slide the bottom of the engine where they are stored (64) and a pump system (65) elevate them to the upper tanks (56) and (57).

The initial startup requires an auxiliary starter (54), which sets the rotary system to its design speed needed to reach the working pressure inside the spheres. The assembly acts as a large flywheel, which implies great stability in its rotation. A computer control system (72) and a specific software controls operation. By the sprocket (66) and power shaft (67) the available energy is used.

The Circular propulsion jet compressor engine designed for nuclear fusion, can be used to transform thermal energy into mechanical and / or electrical by conventional combustion of a stoichiometric mixture of hydrogen (95) and oxygen (94) prepared in the inside capsules of fuel, shown in Drawing 10. In this case is salt water, electric conductive liquid, and as was explained above, this salt water will reach the upper level of deposits (56) and (57) and will completely fill the ducts (58) and (59) and the inner holes of the spheres (60 and (83). Similar to the working in the previous section, the auxiliary engine takes the mechanism to their revolutions design, necessary to reach a pressure inside the spheres higher than the critical point of water. Once these revolutions are reached, the control valve of the feeder of the fuel capsules releases the plunger (78) of the feeding cylinder (77) which, by differential pressure, moves into the liquid (salt water) of the sphere, depositing a capsule (79) in that liquid. Given its lower density in relation to salt water and the centripetal acceleration, the capsule will move in the liquid in order to reach the duct (88) where it will be kept embedded (86). At this moment, the electrical continuity between the tanks (56) and (57) is interrupted. When the control detects the interruption of electrical continuity between the tanks (56) and (57), emits a pulse high voltage by connecting (70) the tank (57). This pulse reaches by capillary (88) to the electrode (96) of the capsule in contact with the liquid and, as the electrode (97) opposite is in contact with earth through the liquid of the sphere, jumps an electric arc between electrodes, providing the activation energy of the hydrogen-oxygen reaction and combustion of the mixture. With water above its critical point, it becomes steam inside the sphere, but does not change its density or pressure on the flame, nor its volume and does not absorb enthalpy by the change of state, and consequently the flame does not cool. The increase in pressure inside the sphere is produced by the violent expansion of the bubble of hydrogen and oxygen in the submerged combustion; it becomes superheated steam and thermal expansion of the water. This increase in pressure opens the shutter (82) the jet thrusters of the sphere (74), leaving water and steam at high temperature and speed, producing a power thrust and transforming thermal energy into mechanical.

Water vapor, outside the thrusters, is condensed in the annular exchanger (63) and slides, as liquid water, at the bottom of engine reservoirs (64). A pump system raises the water level tanks and these tanks supply water to the spheres (56) and (57) to start a new cycle.

### Brief description of drawings

We are using the sequential numbering of the drawings shown for illustrative purposes and not limiting, for this explanation.
**Drawing 1** represents a section elevation of the motor-compressor, using conventional fuel and a possible application for a vehicle. The startup must be done by an auxiliary electric engine (27) which, through the gear (28), takes the shaft (2) to their revolutions according to design. The rotary joint (1) of the hydraulic type supplies fuel. This is transported through ducts drilled axially on the shaft (2) and the conduit drilled in the support (3) arms, to the injector (5). Simultaneously by the rotary joint, and equipped with filter muffler (18), at the base of the shaft (2), the air for combustion is supplied. This air passes through the conduit of the shaft (2) and connected with the rotary joint (17), pneumatic and low pressure type. Through the conduit drilled axially in the secondary axis (8), the air gets to the intake valves (12) and the cylinders (10). These cylinders are integrated in the secondary axis (8) and in them, the combined action of the rotation of the shaft (2) and the axis (8), compresses the air for the combustion by the radial thrust of a piston (9) which alternatively moves horizontally, supported by a linear bearing (13) inside the cylinders (10). The compressed and hot air passes through discharge valves (11) and the rotary joint (37) of pneumatic type for high pressure and temperature, to the injector control (5), in stoichiometric ratios with fuel, it enters the combustion chamber (4). The sphere motor (32) directs the output of combustion gases, in radial or tangential direction and within the plane containing the rotation of the spheres. The platforms (6) and (7) provide support to the secondary axles (8) of the cylinders and make them circulate in rotation about the shaft (2). A nut (16), holds the sprocket (14), on the end of the axis (8). A heat exchanger (21), cools the combustion gases within the engine enclosure, before its exit to the outside by (30), condensing the water vapor produced. The hot water from the steam falls inside the engine to the tank (23), dragging in its drops of micro-particles (pollution) produced in the combustion engine. Records (25) allow periodic cleaning of the engine. An inertial mass (43) turning freely and concentrically with the shaft (2) and resting on the thrust bearing (44) compensates the angular momentum of rotation of the assembly. The base (26) provides support for thrust bearings (19) of the shaft (2) and the closed cylindrical casing (24) support in place the bearings (20) of radial type. The supports (45) connect the engine to the vehicle chassis. The gears (29) and (46) output the power generated. The panel (31) by means of a computer system and specific software, controls the operation and receives signal from: the tachometer (34), rpm central shaft, thermometer (38) of the interior temperature, engine control (32) of the spheres, auxiliary electric engine (27) and control the injectors (5) in rotation, by the friction rings (35) and pipes (33) power.
**Drawing 2** shows the detail of the rotation drive to the axis (8), in mechanical and discontinuously mode. The rod (99) is threaded into the center of the piston and pushes and its end compresses a circular clutch (100), engaging the bottom of the axis with the top.
**Drawing 3** represents a plan section of the engine at the height of the combustion chambers, formed by a steel shell (40) internally coated with refractory ceramic (41). The gases of combustion exit through the exhaust nozzle (39).
**Drawing 4** It represents the sectional plan of the engine compressor air cylinders The sprocket (14) transmits the rotation to the secondary axis of the cylinder, by engaging to a reducing rate set, formed by a worm screw and gear (42) engaging the wheel (14) with the worm screw. The wheel with a larger diameter of this set is engaged in a metallic zipper (15) fixed to the circular support structure.
**Drawing 5** is a sectional elevational view of the motor-compressor, using hydrogen as fuel and, in a possible application, in the production of electricity. Tanks (56) and (57) contain mercury. This fluid fills the ducts (58) and (59), which connect the tanks with spheres (49), as well as their own spheres and internal passages (60). The electric motor (54) and the gear (55) perform the startup, until the shaft (47) reaches the design speed. The arms (48) are attached to the shaft. Theses arms support to the spheres (49) at their ends. The axial bearings (51) of the central shaft, the radial bearings (50) of the mentioned axis (52) and cylindrical rollers support the efforts of rotation. All bearings are supported on the cylindrical metallic body (53). The metallic cylindrical body seals the engine. A heat exchanger (63) cools the mercury vapor produced in the engine operation and liquid mercury flows to a tank (64) from which, pumps elevate it to the tanks (56) and (57). Each sphere has a coil (61) DC connected to the control (72), through the friction rings (62). The control panel, via computer and special software controls the operation, for which it has received among other parameters, the thermometer signal (69) internal temperature, the working of the coils (61), liquid pumps (65), the starter motor (54) and tachometer signal (68) of shaft revolutions output power (67). RF source (70) is activated by the control). Anti-vibration foundations (73) support the engine on ground.
**Drawing 6** represents a plan section by a horizontal plane at the height the wheel of the spheres. The exhaust nozzles (74) expel mercury vapor and liquid at very high speed and temperature. Each sphere incorporates a fuel feeder (75) on the opposite side to the exhaust nozzle.
**Drawing 7** represents the plan section of a sphere, and open feeder fuel propellant engine. The solenoid (76) controls the actuation of the hydraulic cylinder (77) with a plunger (78) of double and differential pressure effect. A chamber (79) at the end of the plunger, deposits a small capsule, containing H₂ and D within the sphere filled with liquid at very high pressure. The sphere is formed by a steel casing (81) with drills made by fine diameter ducts (83), filled with fluid. Inside the sphere has a coating (80) of refractory ceramics. The exhaust nozzle consists of a cylindrical body in which, inwardly, a hydraulic shutter (82) can slide, controlled by the electro valve (84) and acting by differential pressure.
**Drawing 8** represents the plan section of a sphere, fuel feeder and closed shutter of the exhaust nozzle. The fuel feeder has a capsules comb (85), ending in a detent spring to load one by one, in the chamber of the plunger. When the capsule has been deposited within the sphere and by its lower density, it moves towards the nearest point to the rotation axis
**Drawing 9** is an extension of the embedded capsule, a previous moment of the nuclear fusion. The capsule (86) interrupts the physical and electrical continuity between mercury ducts (88) connected to the RF source (70) and the grounded mercury sphere. The H₂ and D inside the capsule are crossed by the lines (87) of the magnetic field of the coil.
**Drawing 10** represents elevation, vertical section of a capsule of H₂ and D contained in a thin capillary (91). An electrode of metallic tip (90) closes the thinnest axis end and a plug (89) the other end. The body material (92) is electrically insulator and its center of mass lies next to the end (93) of larger diameter.
**Drawing 11** represents elevation section vertical plane of a capsule of H₂ and 0₂, which can be used in the same engine designed and built for nuclear fusion, replacing mercury by salt water and using a single RF voltage pulse. The O₂ and H₂ are introduced into the capsule (94) and (95) separated by a partition (98), having two spaces as a result. Two metal electrodes (96) and (97) close the two spaces mentioned above.

### Explanation of a possible method of manufacture

**Manufacture of circular propulsion jet compressor-engine using conventional fuel:** In ceramic workshop, the inside of the spheres are made of refractory ceramic in split molds, with the necessary holes for the injection of fuel, oxidizer and output of gasses. In foundry, the outer steel cover of the spheres it is made of two pieces of steel. This outer steel cover closes over the ceramic pieces by steel screws. On the outer steel cover, drills and threads are done in their places in order to junction, on the one hand, the fuel injectors and oxidizers (5), and on the other hand, junction the exhaust nozzle and the electric motor of orientation of the propulsion. At the same time, the central shaft (2) is made of steel of conical configuration and once it is machined, it receives a hard facing heat treatment. Moreover, machined axial and transverse drillings for feeding fuel and oxidizer to injectors (5) are made. The arms of the spheres (3) are made of rolled steel and joined to the central shaft by a concentric steel coil with the shaft and locked with screws to it. A washer-shaped track is placed on the arms, adjusted to the anchor coil in its inside diameter and its outside diameter is suitable for axial bearing support (44).

Circular platforms (6) and (7) are produced of plates of rolled steel and machined by drills for the shaft and for bearing bushes supports. On the platforms are made to a mechanical grinding for adjusting the axial bearings and are made drills threaded for mechanical connection with the central shaft. Simultaneously, the secondary axles (8) are made with axial and radial holes for input and output of the oxidizer and the joining of the rotary joints (17) and (37); and the transverse drills are manufactured in the corresponding zone to support the cylinders (10). At the lower end of the axes a thread for the nut (16) is machined. This nut attached to the sprocket (14). The cylinders (10) of the appropriate length, can be purchased in the market because their production is standardized and internal grinding only requires a perfect fit for the heads of the pistons (9). The pistons are made of steel and their outer surface receives a cemented treatment. The ends of the pistons of greater diameter than the central body are removable and fixed to the central body by screws. These ends incorporate segments of sliding fit with the inner surface of the cylinders. The different gears (14) and (42) and the circular zipper (15) are standard manufactured and central bores are adjusted to the diameters of the axes by machining. The (24) closing or chassis of the whole equipment is made of rolled steel or cast iron and it has three parts: lower, middle and upper. In the middle, the heat exchanger (21) ring is placed and it is made of stainless steel tubes and joints (22) of input and output of the cooling water of the engine. At the base of the equipment, the circular rack is installed (15) by a metal support, and holes for air intake (18) are mechanized. Furthermore, at the base there are: cleaning manholes covers (25), the bore (36) for water from the combustion, holes which fix the radial bearing (20) on the base of the central shaft and the machining the axially bearings seat (19). On the upper body of the equipment or chassis, there are: the holes necessary to fix the catalyst (30), the muffler bracket starter motor (27) and passage to the upper radial bearings of the central shaft (2).

The assembly starts anchoring the base (26) on the foundations (45) and placing the air intake, silencer and filter (18) on the base. Then, the lower body chassis (24) and the thrust bearings (19) are installed. Then radial bearings are engaged at the lower end of the central shaft. The shaft is on the thrust bearings (19), leaving the air inlet through the shaft joined to the air intake (18) by sliding fit. Once this completed, from the top of the central shaft, the lower platform (7) is inserted with its anchor steel coil into the central shaft. Each of the cylinders with their pistons and valves is placed in the transverse hole of its respective secondary axis (8) and the set is fixed on the lower platform (7), wherein the set leans against an axial bearing and verticality is maintained by the radial bearing fixed to the platform. Below the platform (7), the gear (14) is fixed to the secondary axis (8) with a nut (16) and the rotary joint is fixed to the air inlet (17). On this platform, the bearings and the speed reducer worm screw are fixed (42). After this, the gear (14) and the zipper (15) are engaged. Using standardized elements for pneumatic circuits the air inlet of the shaft (2) is joined with the rotary joint (7). Then, the upper platform (6) is assembled is by fastening screws to the steel coil of the central shaft (2). The radial bearing of the head of the shaft (8) is assembled on the platform mentioned before. The rotary joint discharge of compressed air is installed on the upper end of the shaft. Then, the pneumatic conection are made between the discharge valves (11) and the rotary joint discharge of the upper end of the secondary axis (8). Once this process is completed, the arms which support the spheres must be assembled to the central shaft (2) with a fastening steel coil. This steel coil is introduced from the top of the shaft, sliding down until it gets to its place, resting on a step of the shaft and the coil is fixed to the shaft with screws. Injection mechanisms (5) of standard manufacturing for oxidizer and fuel are assembled on the arms. Next, the spheres (4) are fixed to the ends of the arms and the hydraulic and pneumatic connection of the injectors is made by means of hoses for high pressure and temperature, allowing some rotation of the spheres on its vertical axis and the routing motor (32) of the thrusters. Then, axial thrust bearings (44) are fitted on the sliding track of the arms, and on them the mass compensation of angular momentum of the assembly (43) provided with radial bearings that allow free rotation, concentric to the central shaft (2). Once this montage is finished, wiring connections and injectors (5), routing engine (32) and indoor temperature control (38) are made. The rotating elements, which require electrical connection with control, are connected to the friction rings (35). At this stage of montage, the middle body of the equipment is assembled, being attached to the body of the base of the equipment by screws and synthetic flat gaskets for high temperature of standard manufacturing. This medium body carries inside the annular exchanger (21) heat and fittings for hydraulic connection to the external cooling circuit (22). Next, the output connections of electric friction rings are performed and the upper body is installed on the middle body by screws and seals, closing the engine. This upper body has the following embedded elements (30) of standard manufacturing; muffler of no condensable gases outlet, catalyst of separation of 2NO in N₂ 0₂, and opening gate which opens by overpressure for the expulsion of the gases produced. Furthermore, the upper body incorporates holes for the junction of the bracket bushing of the upper radial bearing of the central shaft (2) and for the junction of the starter. This starter and its transmission (28) are assembled with the toothed pinion (29) for power output. Finally, the rotary joint (1) is assembled to the upper end of the shaft (2). The rotary joints are of standard manufacturing for automotive and aeronautics. Electric cables exit from the inside of the motor (33) through the cable gland installed and connected to the operation control (31), ending with this operation the manufacture and assembly of the engine.

**Manufacture of Circular propulsion jet compressor-engine using hydrogen in a nuclear fusion process.** In ceramist workshop, the spheres are manufactured, (49) for ceramic refractory ovens, it is the similar to market. The spheres are cast into two halves (80). On them, it is made: all the drills for the circulation of liquid, with outputs both outside to inside; the holes for the junctions of the electric DC coils (61) and ducts (59) and (58); the seat for the fuel capsule (86) and the recess for the exhaust nozzle (74) and the recess for the plunger (78) of the feeding cylinder of the fuel capsules. Cast iron, they are modeled and melted the outer covers of ceramic pieces. These iron covers are manufactured in two halves (81) and mechanized by means of drills that form the continuity of the network of the inner ducts (60), (83) and (88), continuation of the recesses for coils (61) and ducts (58) and (59). The exhaust nozzle (74) is assembled in one of the halves, through screw holes for the junction with the outer body of the support. In this half a perforating drill is mechanized with grinding finish; on this drill the conical plunger (82) of the exhaust nozzle is fitted. The exhaust nozzle is manufactured in three parts: body, plunger and guide. The body is assembled on the spherical surface by means of screws and at the other end a threaded hole is mechanized for the junction of the hydraulic control valve (84) and there are threaded holes in the circular perimeter of the base, to secure by screws, the movement guides of the plunger (82). In this plunger its upper conical surface to fit over the cone of the sphere is machined, then its cylindrical surface to fit slidably machined, but snugly, in the inner surface of the body. Then it is performed a recess in the axial direction of the shaft, where the guide is coupled and remains closed the hydraulic circular enclosure. The guide fixed with screws into the threaded holes in the base of the body. On the plunger it is practiced a circular emptying following the direction of the axial axis, where the circular enclosure closing hydraulic guide will be placed. The guide is fixed by screws to the threaded holes in the base body. In the plunger, four perforating outlet holes are drilled for exit of the gasses, following a path axially. Once this work is completed, the two halves of the sphere are adjusted, and by pressure screws blockers, are joined integrally. The body of exhaust nozzle is assembled to the outer metal part of the sphere by means of iron screws. The plunger is adjusted on the inner cylindrical surface of the body and is closed with the guide piece, fixed by screws in the body. On the side of the sphere opposite the exhaust nozzle, the fuel feeder (75) is assembled on the sphere, by fixing screws on the iron surface. The fuel feeder comprises a metal body of rectangular parallelepiped form .This metal body has the capsules combs (85) and fittings of input / output of the liquid (Hg). The assembly of the fuel feeder on the sphere is made with the plunger collected in the cylinder. Simultaneously, the central shaft (47) is manufactured in two parts: main body and head, which are joined by male-female screw. Once the different diameters for adjusting the thrust bearings (51) and radial (50) have been mechanized, a hard facing heat treatment is practiced on the main body and then, the concentric axial holes and the radial holes are made for two independent hydraulic circuits (58) and (59). The friction rings (62) are adjusted. In the main body of the threaded bore is machined to its junction with the head of the shaft. This head, made of the same type of steel material and is larger diameter than main body. It is mechanized to accommodate at its highest end: tanks (56) and (57) of liquid (Hg), the concentric bores of the extension of the hydraulic circuits, the assembly of the gear (66) and the screw fitting to the main body shaft. The tanks of liquid (56) and (57) are cylindrical and made of iron. Non-through threaded are mechanized into the outer circumference of the largest tank (56), and at the upper closure cover of this tank, one bore hole with adjustment gland is mechanized, too. The tank with smaller diameter (57) is electrically insulated, by porcelain or synthetic coating, from the liquid (Hg) of bigger tank. The smaller tank is concentrically assembled to the other tank at its top by screws. A drill is performed on the upper lid of the smaller tank and a bulkhead high voltage electrical insulator is assembled. The metal support arms of the spheres (48) are made of rolled steel of high quality and adequate mechanical strength. Their outer end is mechanized in a hemisphere of the external dimension of the metal shell of the sphere and, at the bottom of that end, a plane with negative slope and constant curvature is mechanized. Steel plates for the arms are manufactured and welded together, following the curvature of the inclined plane mentioned above. Then, the plates receive a mechanized and polishing treatment of grinding and superficial cemented to the outer flat face of the curvature. They are fixed by welding, by the inner flat face, closing a circumference of the inclined plane. The chassis or engine outer casing (53), is manufactured in steel and in four parts; the base, the middle body, the upper body and the closure. The base, made of welded steel plates and with circular flat shape, is mechanized making a circular support for supporting the radial bearing (50) and making a perforation in its center. In the concentric inner face to this perforation, the surface of the seat of the axial bearing (51) is mechanized. At the bottom of the base, drills for sealed passage of the steel pipes for the pumps of elevation are made. The middle body, with circular and tilted downward sloping, is made of steel plates from which, the different parts are joined by electric welding, forming a truncated cone. On the inside inclined plane, following interior generatrix and at the center of its height, supports (52) with trapezoidal shape are fixed. These supports have mechanized a seat for cylindrical rollers and a through bore at the top at their base. The upper body is made of steel plates, giving a covering structure which continues the circular curvature of the middle body. Once welded together the different pieces, interior threaded bores are mechanized and, by steel supports, a set of steel pipes (63) are fixed. These pipes occupy the inner perimeter of the circle, forming a heat exchanger, which is integrated into the upper body. The closure is a circular flat plate mechanized with a central bore to give support to the upper radial bearing bushing and with the holes for assembling the starter (54) with screws. At the same time as the other work is being done, the land on which the Circular propulsion jet compressor engine will be installed is prepared by the building a bedplate of reinforced concrete, whose metal parts will join ground and the performing a mesh of deep electrodes in the circular perimeter, installed in parallel. Reinforced concrete foundation settled on lead plates and these plates lead stand on the firm ground. The assembly begins with the anchoring the base of engine chassis to the concrete bedplate. This anchoring is performed by means of bolts welded to the ironwork of the base which is welded to the grounding. Then the axial bearing (51) is installed. On this axial bearing, the main body of the shaft (47) is left in place and after adjustment of the radial bearing it is held upright the main body of the shaft. The next step is to fix the middle body chassis to the base through with some bores and screws throughout its circular perimeter with the use of gaskets. The rollers (52) are installed in their places. The supports arms (48) are introduced from above until the tilted circular track rests on the rollers (52) and then assembled. The arms are assembled to the central shaft by a steel coil concentric with the shaft and integrally joined thereto. This junction is carried out simultaneously by screws that secure the arms, the coil of steel and the shaft itself, which is transversely drilled through a diameter and ending on the other side of the head of the screw in self-locking nut and locknut. Spheres (49) are assembled at the ends of the support arms and the hydraulic circuits (58) and (59) are connected by steel fittings of high pressure. The electrical circuits of the coils (61) are connected to the friction rings (62) by shielded conductors and protected from high temperatures. Then the upper half body is mounted. This upper half body incorporates perimeter heat exchanger (63). The upper half body is fixed by screws and gaskets around its perimeter circular on the lower half body. Then, the circular plate which closes the body of the engine is installed, and thereon, the adjustment bushing of the radial bearing of the shaft (47). This closure is attached to the upper half body by threaded screws around its circular perimeter and gaskets. Concluded the above, it is screwed into the main part of the shaft, the shaft head, with left hand thread if the motor rotates clockwise or vice versa. The gear (66) is assembled and the liquid tanks (Hg) (56) and (57) are fixed on the head of the shaft. The starter motor (54) and mechanical transmission (55) with the central shaft is assembled. The assembly concludes with the hydraulic pump connections (65) to the tanks through iron pipes and with electrical connections of the friction rings (62) with control center (72), starter (54) and the level signals of the tanks (56) and (57), indoor temperature indicators (69) and the revolutions of the central shaft (68), among others.

## Claims

1. Circular propulsion jet compressor-engine, through a circular array of jet propellers (39) with combustion chambers of spheroidal geometry (4) generates a tangential push to the turning radius and therefore resulting angular momentum about a shaft of rotation (2). This pulse is the result of the violent expansion produces a combustion reaction inside the chambers, causing the action-reaction effect similar to a jet or jet reactor. The circular propulsion jet compressor-engine is **characterized by** a central shaft (2), vertical in relation to the motor foundations (26) supported on radial (20) and axial bearings (19) and on support (23) structure of the cylindrical or conical geometry. It has a hydraulic rotary joint (1) for the fuel inlet. It has air intake valve with silencer and filter (18) for the entry of oxidizer, which penetrates through axially perforations in the central shaft and this oxidizer can be pressurized to a determined pressure. It has radial bores in the central shaft and ducts of fuel and oxidizer and it has injector system (5) for both in the combustion chambers. It has an ignition system inside the chambers, which may be by spark plug, hot spot by ceramic electric resistance or injection of oxidizer (air) very hot. It has arms (3), integrated and perpendicular to the central shaft, which support, at their ends, spheroidal combustion chambers (4) with exhaust nozzle (39), forming a circle or wheel of spheres. It has a refractory ceramic coating on the inner wall of each combustion chamber. It has a cooling system of the gases generated in the combustion chambers and condensation of water vapor produced by a heat exchanger (21) and connections (22) input-output water to the exchanger. It has a reservoir (23) for collecting particles unburned fuel alongside the condensed water, and overflow (36) output filter for clean water. It has a registration system (25) and manual removal of polluting waste accumulated at the bottom of the engine. It comprises an output system no condensable gases (30). This system has an outlet overpressure and has filter, catalyst and muffler. It has a boot system formed by a bank of batteries, electric engine (27) and a transmission (28) gear. It has a control panel (31) via computer and external power supply, friction rings (35) for electrical connection of the injectors with the control panel and also connected with each other, the thermometer (38) and tachometer (34). It comprises a gear (29) output mechanical power generated and seat base (26) above (45) anti vibratory foundations.

2. Circular propulsion jet compressor-engine according to claim 1, which in its industrial application as engine for a traction for a sea or land transport vehicle, has the ability to contribute to the maneuverability of the vehicle, via a directional momentum, according to a preset direction vector, in forward acceleration or deceleration, right or left, and **it is characterized by** installing an inertial mass (43), compensating the angular momentum of the motor. It has axial bearings (44) for the free and concentric rotation with the central shaft (2) of the inertial mass and it has a routing system of the output ejectors of combustion gases, by electric motors (32), installed in spheres and it has computer control and specific software, which, among other parameters of engine working, control and command the positioning of the electric motors spheres, orienting the vector impulse response according to a determined time and a determined arc of circumference in accordance with a direction vector introduced into the control.

3. Circular propulsion jet compressor-engine according to claims 1 and 2, which in its industrial application as the driving element of propulsion for any transport vehicle, has the ability to contribute simultaneously to the drive and the maneuverability upward or downward, acceleration or deceleration of the vehicle and keeping at all time zero the angular moment that is produced on the structure of the vehicle, by the turn of the wheel of spheres. **It is characterized by** two circular wheels of propulsion spheres on the same shaft, equipped with directional thruster electric motors (32). It has a central shaft common to the two wheels mentioned; one of the wheels of spheres has arms supported and joined to the central shaft and the other wheel of spheres, rotating freely on the same shaft. It has an axial bearing in order to support the wheel freely over the other. It has supports of the radial bearings of the central shaft on its ends; these supports are joined to helical gear zippers which form arcs of circumference whose geometric centers coincide with the center of symmetry of the central shaft. It has worm screw engaged with the gear zippers. It has electric motors whose axes are joined to worm screws. These electric motors are fixed to the vehicle structure. It has guide brackets fixed to the vehicle structure and where gear zippers can slide. It has electrical connections to the motors that can make them rotate in both directions. It has a control system by computer and specific software that, among other functions, controls and commands, according to a direction vector introduced in the control, position and rotation of the motors of the worm screw and position and rotation of the electric motors of the spheres.

4. Circular propulsion jet compressor-engine according to claims 1, 2 and 3 has to inject the air for combustion at very high pressure and within a revolutionized system to achieve a high thermal efficiency measured by its thrust reaction. The high pressure air is achieved using the force field centripetal acceleration caused by the revolutions of the central shaft with a certain radius of rotation and by a piston of significant mass which reciprocates within a cylinder and within the field of forces. Circular propulsion jet compressor-engine is **characterized by** it has plates or circular supports (6) and (7), fixed to the central shaft (2). It has horizontal cylinders (10) in relation to the central shaft and it has axes (8), parallel to the central shaft, which support the cylinders symmetrically and transversely. It has axial bearings that support the axes on the plates and it has radial bearings whose bearing support are attached to the circular brackets plates. It has a linear bearing (13), for each of the cylinders, fixed and centered inside the cylinder, and it has a piston (9) in the cylinder, and this piston has a central body which slides on the linear bearing and two ends of greater diameter which fit and slide through sealing rings on the cylinder. It has butts closing the ends of the cylinders, incorporating air intake valves (12) (or the compressed gas) and discharge (11). It has in each of the axes, which support the cylinders, two axial holes in their center, which are independent and are communicated by two rotary valves (17) and (37) at their ends. It has pneumatic ducts, calibrated in accordance with the working pressure, which connect the rotating air intake valves with intake valves of the cylinders ,with the discharge valves of the cylinders and with the injection system (or use) of the compressed air (or gas). It has some mechanical system (42) or electromechanical system with actuators for driving and locking for cylinder axes. It has a set of sprockets, which form a train of speed reducer for each of the cylinders and the axes of these wheels and their bearings are supported on plates or circular supports, being the slow wheel coupled the cylinder axis (8) and the high speed gear in engagement to a circular zipper (15) for mechanical system or worm screw fixed to the shaft of an electric motor, for the alternatively electromechanical system. In the mechanical system, and alternatively to the aforementioned and revved devices, it has each of the axes (8) party in a set of two pieces, the upper that hugs the cylinder and the bottom coupled to the gear wheel (14). It has, for the central body of the piston, an open type linear bearing which is installed with the open slot to the lower generating. It contains a linear slot in the cylinder, which coincides with the linear groove of the bearing. It contains a rod (99) fixed to the lower and central part of the piston and said rod can slide by said grooves. It contains a clutch (100) between the two parts forming the axes (8) below the platform (7) and it has spring actuator on the clutch by means of the piston rod. In the electromechanical system, it has the electric motor fixed to the turntable platform and a circuit for monitoring and control. It contains, in this circuit, piston position sensors (NO with latching) and a cylinder limit switch (NC) and it provides that every half turn thereof are activated. It has an electrical wiring that connects the engine with the maneuvering elements of the piston position sensors and cylinder limit switches. For both systems, it has a central motor and control panel with a computer and specific software, which can be part of the thermal engine or independent of it. It has in the control pane, among other parameters, the command and control of the revolutions of the central shaft as a function of pressure and volume of air displacement (or gas) according to design.

5. Circular propulsion jet compressor-engine through a circular array of jet thrusters (74) with combustion chambers of spheroidal geometry (49) generates a tangential push the turning radius and therefore resulting angular momentum about the shaft of the circle in rotation (47). This impulse is the consequence of the principle of action-reaction, by the violent expansion that occurs inside the combustion chambers, to fuse the nuclei of H₂, inside a capsule surrounded by liquid (Hg) and subjected to high pressure. Such pressure originates field forces centripetal acceleration and compact H₂ atoms. A variable electric field RF (radio frequency) ionizes the atoms, while a constant magnetic field passes through the ions (plasma), creating in the plasma an inductive effect and resistance to passage of current, whose value is directly proportional to the RF frequency. Fusion occurs when, in the pre-mentioned conditions, electrical discharges of high currents are performed on ions in the capsules. For this, the circular propulsion jet compressor-engine **is characterized by** it has a rotational center shaft (47), an axial bearing (51) and radial bearings (50) supported in a fully closed and sealed conical structure (53). It has some mechanical arms (48), joined integrally to the central shaft and supported at its ends on conical or cylindrical roller bearings (52). It has spheres or spheroids (49), internally protected by refractory ceramics (80) with spherical covering of great thick steel (81) and perforated by a multitude of thin ducts and capillaries inside (83), all of them hydraulically interconnected. It has electromagnetic coils (61) inside the spheres, DC, closing its magnetic field on fine ducts (88) and these perforate the spheres at the nearest point to the central shaft of rotation. It has a fuel feeder capsules (75), fixed to each of the spheres, within which there is a capsules comb (85) and a hydraulic cylinder (77) with a double-acting plunger (78) and control valve (76). It has a capsule feeding chamber at the end of the plunger and a detent spring, at the end of capsules comb. It has a steam outlet nozzle, by means of a hydraulic cylinder coupled to each of the spheres and these hydraulic cylinders has a shutter made of a perforated plunger (82) and guide movement of this plunger and control valve (84). It has fuel capsules, of conical configuration, perforated by a thin capillary (91) in its longitudinal axis and containing a charge of H₂ and D inside the capillary. It has in each capsule a steel tip (90) closing the capillary of the capsule by the smaller base of the truncated cone and a closing plug (89) on the side of the larger base. It has each capsule provided with an electrically insulating material which surrounds the capillary and whose center of gravity is next to the larger base of the capsule. It has a system of iron pipes forming the hydraulic circuit of a heat exchanger (63) in the inner circle and larger diameter perimeter of the iron envelope of the motor structure and it has fixers at both ends of the circuit connected to an external source of water. It has a tank (56) with liquid (Hg) in the upper end of central shaft. It has fine ducts which go from the tank to each sphere and these ducts are inside the central shaft and inside the support arms of the spheres (59) and connect the liquid tank (Hg) with the thin ducts and capillaries (60) and (83), drilled inside the spheres. It has a second tank (57) of liquid (Hg), concentric with the previous one and secured to the rotating shaft, sealed and electrically insulated from the first tank. It has fine ducts that channel the liquid (Hg) from the tank to the spheres, electrically isolated from ground (58), axially inside the ducts of the first tank and radially connected with the thin capillary (88) drilled in each of the spheres next to closest point of rotation of the shaft, inside the sphere. It has a ground, perimeter around the circular motor, with electrodes in parallel and very small resistance path to ground environment. It has a ground connection (71) connecting the liquid from the first tank with ground. It has a control panel (72) and connection to an external source of RF energy, with capacity for an alternating current at high frequency and high electric current peak. It has a computer and special software which, among other functions, connect (70) the external RF with the liquid of the second tank, when it detects the loss of electrical continuity between the tanks. It has electric rings (62) on the central shaft of rotation. It has electrical connection between the rings and the control panel on one side through their electric brushes and, on the other side, the rings are electrically connected with the coils (61) DC, and the solenoid valves of the hydraulic control (76), (84) as well as other elements in rotation. It has at the bottom of the engine, a storage tank (64) of the liquid (Hg) condensed in exchanger perimeter (63) and it has electric pumps (65) and iron pipes fixed thereto and connected from the tank to upper deposits (56) and (57). It has thermal starter motor (54) and has a thermometer (69), tachometer (68) and level indicator condensate storage tank, connected to the control panel. It has a gear (66) fixed to the shaft. It has a gear starter (55) and a gear output power ((67). It has a settlement (73) on firm ground, of reinforced concrete on anti-vibration support.

6. Circular propulsion jet compressor-engine according to claim 5 that tangential momentum to the turning radius and therefore resulting angular momentum about the axis of the circle in rotation is due to expansion that occurs inside the combustion chambers , by stoichiometric mixtures on burning H₂ and 0₂, inside capsules submerged in salt water at high pressure. **It is characterized by** containing salt water in the upper tanks, (56) and (57), internal circuits (58), (59), (60), (83), (88) and combustion chambers (49). The said capsules has conical configuration and fuel storage tanks (94) and (95), interior to capsules containing O₂ and H₂ in stoichiometric amounts, separated by a partition (98). It has a steel tip (96), closing the tank 0₂ and a metal plug (97), closing the H₂. It has computer control panel and specific software and contains a source of pulsed high voltage power. Software provided in connection pulsating source to the tank (57), when receiving the signal from the lack of electrical continuity between the tanks.
